**Europäisches Patentamt**

**European Patent Office**

**Office européen des brevets**

(11) Veröffentlichungsnummer: **0 370 130**
**A1**

## (12) EUROPÄISCHE PATENTANMELDUNG

(21) Anmeldenummer: 88119556.4

(22) Anmeldetag: 24.11.88

(51) Int. Cl.⁵: **B65G 1/04**

(43) Veröffentlichungstag der Anmeldung:
**30.05.90 Patentblatt 90/22**

(84) Benannte Vertragsstaaten:
**AT BE CH DE ES FR GB GR IT LI NL SE**

(71) Anmelder: **TRAPO-Stumpf GmbH**
**Industriestrasse 1**
**D-4423 Gescher 2 (Hochmoor)(DE)**

(72) Erfinder: **Nelles, Wilhelm**
**Lohauser Esch 35**
**D-4284 Heiden(DE)**
Erfinder: **Schulze Bisping, Michael**
**Dörholt 21**
**D-4425 Billerbeck(DE)**

(74) Vertreter: **Patentanwaltsbüro Cohausz &**
**Florack**
**Postfach 14 01 20 Schumannstrasse 97**
**D-4000 Düsseldorf 1(DE)**

(54) Zwischenspeicher für Stückgut.

(57) Die Erfindung betrifft einen Zwischenspeicher für Stückgut mit einem Speicherturm aus mehreren senkrecht übereinander angeordneten kreisförmigen waagerechten Lagerebenen, die an einer mittigen Säule befestigt sind, wobei der zylindrische Speicherturm rundum von einer prismatischen Verkleidung (5) umgeben ist, die in feststehender Belade- und Entnahmehöhe eine Beschickungsöffnung (7) aufweist, deren Höhe etwa dem Abstand zweier Lagerebenen (4) voneinander entspricht, daß der Speicherturm in seiner Höhe so weit verstellbar ist, daß jede Lagerebene (4) an den unteren Rand der Beschickungsöffnung (7) fahrbar ist, und daß seitlich des Speicherturms um senkrechte Achsen sich drehende Rollen (6), Walzen oder Gleitführungen angeordnet sind, an denen die Lagerebenen (4) mit ihrem Umfang anliegen und geführt sind.

Fig. 1

## Zwischenspeicher für Stückgut

Die Erfindung betrifft einen Zwischenspeicher mit einem Speicherturm aus mehreren senkrecht übereinander angeordneten kreisförmigen waagerechten Lagerebenen, die an einer mittigen Säule befestigt sind.

Es sind Drehturmspeicher bekannt, die auf einer getrennten Hubeinrichtung montiert sind, damit sie angehoben werden können. Das Anordnen einer getrennten Hubeinrichtung ist konstruktiv aufwendig, und darüber hinaus erfordert das Beschicken und Entnehmen des Stückguts aufwendige Vorrichtungen, da an die jeweilige Speicherebene gefahren werden muß.

Aufgabe der Erfindung ist es, einen Zwischenspeicher der eingangs genannten Art so zu verbessern, daß bei einfachster Konstruktion eine zusätzliche Hubeinrichtung nicht erforderlich ist, das Beschicken und Entnehmen leicht und ohne hohen konstruktiven Aufwand durchgeführt werden kann und der drehbare Speicherturm besonders einfach und sicher geführt ist.

Diese Aufgabe wird erfindungsgemäß dadurch gelöst, daß der zylindrische Speicherturm rundum von einer prismatischen Verkleidung umgeben ist, die in feststehender Belade- und Entnahmehöhe eine Beschickungsöffnung aufweist, deren Höhe etwa dem Abstand zweier Lagerebenen voneinander entspricht, und daß der Speicherturm in seiner Höhe so weit verstellbar ist, daß jede Lagerebene an den unteren Rand der Beschickungsöffnung fahrbar ist.

Ein solcher Zwischenspeicher stellt ein geschlossenes Speichersystem dar, das rundum von einer Verkleidung umgeben ist und zwar stationär eingesetzt werden kann, aber leicht verfahrbar ist. Der Zwischenspeicher besitzt eine konstante Beladungs- und Entnahmehöhe, so daß ein Beschicken und Entnehmen besonders leicht durchführbar ist. Damit sind die hierfür einsetzbaren Geräte preiswert und wenig störungsanfällig. Es ist eine besonders einfache und sichere Lagerung gegeben.

Besonders vorteilhaft ist es, wenn die Lagerebenen in ihrem Abstand zueinander stufenlos veränderbar sind, da hierdurch die Lagerebenen leicht an das jeweilige Stückgut anpaßbar sind.

Eine geringe Bauhöhe, eine einfache Handhabung und eine hohe Arbeitssicherheit bei konstruktiv einfacher und preiswerter Bauweise wird dann erreicht, wenn in der Säule ein Hubelement, insbesondere ein Spindelgetriebe angeordnet ist, durch das der Speicherturm vertikal verstellbar ist. Hierbei kann das Hubelement, insbesondere die Spindel mit der Unterseite in einem waagerechten Boden gelagert sein, in dem der Antrieb für das Hubelement, insbesondere die Spindel angeordnet ist. Auch wird hierzu vorgeschlagen, daß bei Verwendung eines Spindelhubgetriebes auf der Spindel im Boden ein Kettenrad befestigt ist, auf der eine von einem E-Motor angetriebene Kette liegt.

Ein besonders einfacher und leichter Transport der Vorrichtung ist dann erreichbar, wenn der den Speicherturm und Verkleidung tragende Boden an seiner Unterseite zwei waagerechte Öffnungen für die Gabeln eines Gabelstablers aufweist.

Ein Ausführungsbeispiel der Erfindung ist in den Zeichnungen dargestellt und wird im folgenden näher beschrieben. Es zeigen:

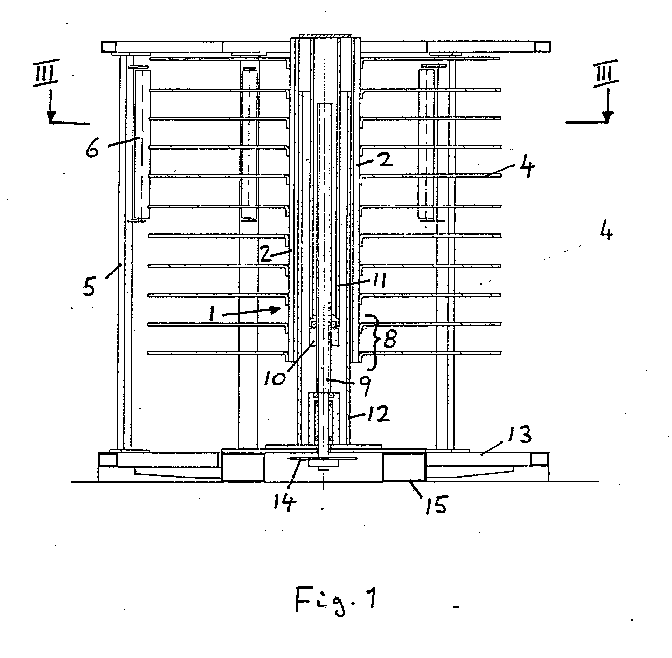

Figur 1 einen senkrechten axialen Schnitt durch den Zwischenspeicher,

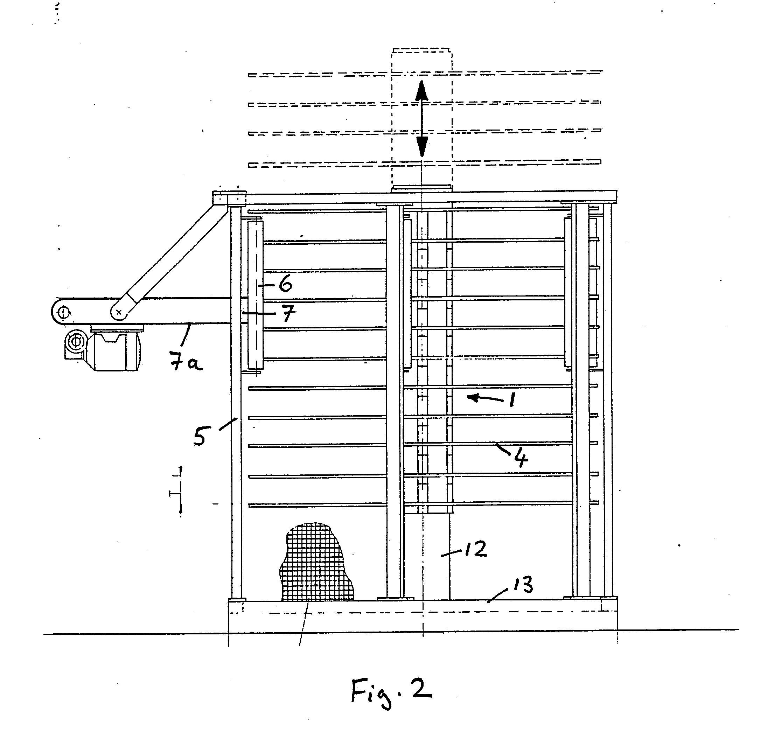

Figur 2 einen senkrechten axialen Schnitt durch den Zwischenspeicher im Bereich der Beschickungsöffnung,

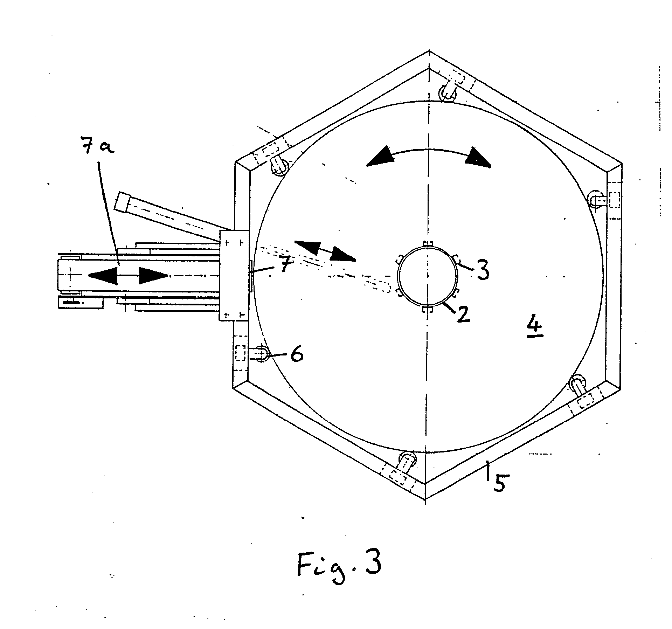

Figur 3 einen waagerechten Schnitt nach III-III in Figur 1.

Der Zwischenspeicher weist eine senkrechte Säule 1 auf, die aus einem Rohr 2 besteht. Außen am Rohr sind in regelmäßigen Abständen senkrecht U-förmige Profile 3 achsparallel befestigt, an denen Lagerebenen 4 höhenverstellbar eingehängt sind. Die ringförmigen Lagerebenen 4 sind von einer im Querschnitt prismatischen, insbesondere sechseckförmigen Verkleidung 5 umgeben, die auf der Innenseite senkrechte Rollen oder Walzen 6 trägt, die am Umfang der Lagerebenen 4 laufen.

In der Verkleidung 5 befindet sich im oberen Bereich eine einzige Beschickungsöffnung 7, an der ein Förderband 7a angeschlossen ist. Damit die einzelnen Lagerebenen 4 diese Beschickungsöffnung 7 erreichen, ist das Rohr 2 zusammen mit den Lagerebenen 4 anhebbar.

Zum Anheben des Rohres 2 ist innerhalb diesem ein Spindelgetriebe 8 angeordnet, das eine senkrechte Spindel 9 aufweist, auf der eine Mutter 10 gelagert ist. Die Mutter 10 trägt oberhalb ein Innenrohr 11, das oben über einen Ring oder eine Platte 12 mit dem oberen Ende des Rohres 2 verbunden ist. Ein Verdrehen der Spindel 9 um ihre senkrechte Achse führt zu einem Anheben oder Absenken der Mutter 10 und damit einem entsprechenden Anheben und Absenken des Rohres 2 zusammen mit den Lagerebenen 4.

Das Rohr 2 ist auf einer zylindrischen Führung 12 gelagert, die als Innenrohr auf dem Boden 13 des Speichers steht. Diese rohrförmige Führung 12 ist unbeweglich angeordnet.

Am unteren Ende der Spindel 9 ist ein Kettenrad 14 befestigt, das über einer Kette von einem nicht dargestellten Elektromotor angetrieben ist. Unterhalb des Bodens 13 sind U-förmige oder kastenförmige Profile 15 befestigt, in denen die Gabeln eines Gabelstaplers eingeführt werden können.

Statt eines Spindelgetriebes 8 kann die Säule 1 auch über ein Zylinderkolbenaggregat oder eine anderweitige Hubvorrichtung angehoben werden.

## Ansprüche

1. Zwischenspeicher für Stückgut mit einem Speicherturm aus mehreren senkrecht übereinander angeordneten kreisförmigen waagerechten Lagerebenen, die an einer mittigen Säule befestigt sind, **dadurch gekennzeichnet,** daß der zylindrische Speicherturm rundum von einer prismatischen Verkleidung (5) umgeben ist, die in feststehender Belade- und Entnahmehöhe eine Beschickungsöffnung (7) aufweist, deren Höhe etwa dem Abstand zweier Lagerebenen (4) voneinander entspricht, daß der Speicherturm in seiner Höhe so weit verstellbar ist, daß jede Lagerebene (4) an den unteren Rand der Beschickungsöffnung (7) fahrbar ist, und daß seitlich des Speicherturms um senkrechte Achsen sich drehende Rollen (6), Walzen oder Gleitführungen angeordnet sind, an denen die Lagerebenen (4) mit ihrem Umfang anliegen und geführt sind.

2. Zwischenspeicher nach Anspruch 1, **dadurch gekennzeichnet,** daß die Lagerebenen (4) in ihrem Abstand zueinander stufenlos veränderbar sind.

3. Zwischenspeicher nach einem der vorherigen Ansprüche, **dadurch gekennzeichnet,** daß in der Säule (1) ein Hubelement, insbesondere ein Spindelgetriebe (8) angeordnet ist, durch das der Speicherturm vertikal verstellbar ist.

4. Zwischenspeicher nach Anspruch 3, **dadurch gekennzeichnet,** daß das Hubelement, insbesondere die Spindel (9) mit der Unterseite in einem waagerechten Boden (13) gelagert ist, in dem der Antrieb für das Hubelement, insbesondere die Spindel angeordnet ist.

5. Zwischenspeicher nach Anspruch 4, **dadurch gekennzeichnet,** daß bei Verwendung eines Spindelhubgetriebes auf der Spindel (9) im Boden (13) ein Kettenrad (14) befestigt ist, auf der eine von einem E-Motor angetriebene Kette liegt.

6. Zwischenspeicher nach einem der vorherigen Ansprüche, **dadurch gekennzeichnet,** daß der den Speicherturm und Verkleidung tragende Boden (13) an seiner Unterseite zwei waagerechte Öffnungen (15) für die Gabeln eines Gabelstaplers aufweist.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 005 169 (M. A. N. LAGER- UND SYSTEMTECHNIK GMBH) * Seite 2, Zeile 26 -Seite 5, Zeile 4; Figuren 1-4 * --- | 1,3,5 | B 65 G 1/04 |
| A | DE-A-1 556 626 (MASCHINENFABRIK LORENZ) * Seite 4, Zeile 15 - Seite 6, Zeile 15; Figuren 1-3 * --- | 1,3 | |
| A | DD-A- 245 634 (VEB ELEKTROINSTALLATION OBERLIND) * Seite 2, Zeilen 7-10; Figuren 1,2 * ----- | 1 | |

**RECHERCHIERTE SACHGEBIETE (Int. Cl.5)**

B 65 G 1/00

Der vorliegende Recherchenbericht wurde für alle Patentansprüche erstellt

| Recherchenort | Abschlußdatum der Recherche | Prüfer |
|---|---|---|
| BERLIN | 10-07-1989 | SIMON J J P |

EPO FORM 1503 03.82 (P0403)